# EUROPEAN PATENT APPLICATION

(11) **EP 4 095 514 A1**
(43) Date of publication of application: **30.11.2022**
(21) Application number: 21176242.2
(22) Date of filing: 27.05.2021
(51) Int. Cl.: G01N 19/04

(54) **DEVICE AND METHOD FOR DETERMINING AN ADHESIVE FORCE OF A SEMI-FINISHED FIBER STRIP**

(71) Applicant: Technische Universität München, 80333 München (DE)
(72) Inventor: BÖCKL, Benno, 80539 München (DE); RAUSCHER, Valentin, 80798 München (DE)
(74) Representative: Tautz, Raphael Gerhard

(57) **Abstract**

Provided is a measuring device for determining an adhesive force of a semi-finished fiber strip comprising a thermoset matrix. The device comprises a force sensor, a guide rail, and a carriage. The carriage is mounted on the guide rail such that it is moveable along the guide rail in a first direction. The carriage comprises a receiving unit which is arranged and configured to continuously receive a partial section of the semi-finished fiber strip, a compacting unit which is arranged and configured to press the received partial section of the semi-finished fiber strip onto the receiving unit such that the received partial section of the semi-finished fiber strip is attached to the receiving unit, and a peel-off unit arranged and configured to pull the partial section of the semi-finished fiber strip attached to the receiving unit off the receiving unit such that the carriage slides along the guide rail in the first direction. The force sensor is arranged and configured to measure a force applied onto the force sensor by the carriage sliding along the guide rail in the first direction for determining the adhesive force.

## Description

The present invention is directed to a measuring device for determining an adhesive force of a semi-finished fiber strip, a laying head comprising the measuring device, and a method for determining an adhesive force of a semi-finished fiber strip using the measuring device.

One of the most widespread automated processes for manufacturing high-performance parts from carbon fiber reinforced plastic (CFRP) in the aerospace industry is the thermoset Automated Fiber Placement (AFP).

Using AFP a part can be manufactured by depositing a semi-finished fiber strip pre-impregnated with an uncured thermoset matrix, which is also known as a prepreg (slit) tape, from a laying head onto a mold surface and/or onto a previously deposited tape.

That is, a tape provided by the laying head is positioned on a substrate, i.e., a mold surface and/or a previously deposited tape, and is pressed firmly onto the substrate, particularly by a compacting roller. Thereby, a part is built up additively.

For ensuring a predefined quality of the manufactured part several process parameters must be in a certain, i.e., predefined, range. These process parameters include inter alia a process and/or a material temperature, a deposition speed, a compaction/pressing force, and a tack of the tapes. The tack is an adhesive force of the tapes on a certain substrate.

The temperature, the deposition speed and the compacting/pressing force are set on the AFP system and their compliance is monitored by sensors online, i.e., during the manufacturing process of the respective part.

However, there is no known solution for monitoring the tack online. (Real time) monitoring of the tack is decisive for a stable process control and for an avoidance of defects during the deposition of the tape. Differences in the tack may disturb the part's properties and, in unfavorable cases, may lead to part failure. Therefore, a defect-free, homogeneous deposition of the tape is of central importance. More specifically, if the tack is too high, this can lead to irregular feeding of the tapes or to a material jam within the line. On the other hand, if the tack is too low, this can cause the tapes to detach from the substrate or to form bubbles, i.e., buckles.

Thus, the possibility of online tack measurement is extremely relevant since the tack depends on many influencing factors that are very difficult to determine individually. For example, even minimal differences in humidity or temperature may lead to a change of the tack level. Therefore, it is hardly possible to transfer tack measurements on material samples in a laboratory environment to production.

In the light of this state of the art, one of the objects of the present invention is to provide a device and a method both being configured to overcome the above-described disadvantages of the state of the art.

More specifically, a solution is given to determine an adhesive force, i.e., a tack, of a semi-finished fiber strip pre-impregnated with an uncured thermoset matrix during a manufacturing process of a part.

The object is solved by the features of the independent claims. That is, the problem is solved by a measuring device according to claim 1, by a laying head comprising the measuring device according to claim 10, by a creel comprising the measuring device according to claim 14 and by a method for determining an adhesive force of a semi-finished fiber strip comprising a thermoset matrix using the measuring device according to claim 15. The dependent claims contain preferred further developments of the invention.

The invention described herein makes it possible to measure the tack online in a production environment, so that the tack is known at the time the material is processed.

More specifically, the object is solved by a measuring device for determining an adhesive force of a semi-finished fiber strip comprising a thermoset matrix.

That is, a measuring device for determining a tack of a prepreg tape is provided. Prepregs or prepreg tapes are textile fiber matrix semi-finished products that are pre-impregnated with reactive resins and cured under temperature and pressure to produce components/parts. The reactive resins consist of a mostly highly viscous, but not yet polymerized thermoset matrix, which may be sewed primarily in lightweight construction. The fibers contained can be in the form of a pure unidirectional layer, a woven fabric, or a scrim. Herein, the term "prepreg" covers not only unidirectionally reinforced or flat semi-finished products, but also other preforms of basically any shape, which in the broadest sense consist of an uncured thermoset matrix filled with fibers. The matrix may be in a partially crosslinked, so-called B-stage, and may be pasty to solid, but may be liquefied again by heating.

The measuring device comprises a force sensor, a guide rail, and a carriage. The carriage is mounted on the guide rail such that it is slidable, i.e., moveable, along the guide rail in a first direction.

More specifically, the carriage may be mounted on the guiding rail such that there is only one degree of freedom left. The carriage may be attached directly to the force sensor, e.g., the load cell, and therefore may move only minimally. Thus, it is possible that the carriage does not actually slide along the guide rail over a longer distance, e.g., comparable to a floating bearing, whereby the force sensor is elastically deformed by a movement of the carriage. The degree of freedom of the guide rail may be necessary to guide the force into the force sensor without diverting force.

The carriage comprises a receiving unit which is arranged and configured to continuously receive a partial section of the semi-finished fiber strip (in an operating state of the measuring device), a compacting unit which is arranged and configured to press the received partial section of the semi-finished fiber strip onto the receiving unit such that the received partial section of the semi-finished fiber strip is attached to the receiving unit (in the operating state of the measuring device), and a peel-off unit arranged and configured to pull (i.e. peel) the partial section of the semi-finished fiber strip attached to the receiving unit off the receiving unit such that the carriage slides along the guide rail in the first direction (in the operating state of the measuring device).

The force sensor is arranged and configured to measure a force applied onto the force sensor by the carriage moving/sliding along the guide rail in the first direction for determining the adhesive force (in the operating state of the measuring device).

In other words, a measuring device for determining the adhesion of semi-finished fiber tapes/strips comprising a thermoset (polymer) matrix is provided.

The device may comprise a pick-up/receiving unit movable along a direction of movement, which is configured to pick up a partial section of a semi-finished fiber strip comprising a thermoset matrix to be analyzed in the operating state of the measuring device and to transport it in the direction of movement of the pick-up unit.

The device may further comprise a compacting unit which can be brought into operative connection with the pick-up unit and which is configured to compact the partial section of the semi-finished fiber strip picked up by the pick-up unit in the operating state of the measuring device by means of applying a predetermined force in a compaction direction substantially perpendicular to the (surface of the) semi-finished fiber strip.

The device may further comprise a force-measuring unit/force sensor and a deflection/peel-off unit which is operatively connected to the force-measuring unit and is arranged and configured to deflect the compacted semi-finished fiber strip in a deflection direction essentially opposite to said compaction direction.

The force measuring unit may be configured to continuously measure the force applied to the receiving unit in the deflection direction for a detachment process caused by a movement of the semi-finished fiber strip in the deflection direction.

As described above, known quality assurance measures in AFP production are carried out in separate tests, decoupled from the component manufacturing process. These tests are performed parallel to the production, particularly under laboratory conditions. With all previous measuring methods, one is limited to taking samples of a certain length from the tape and then examining these samples in a laboratory environment.

Therefore, a system is provided configured to measure a tack of a prepreg tape during production, i.e., online/in real time. With the measuring device according to the present invention, on the other hand, it is possible to perform tests on entire spools of prepreg tape without having to take an individual material sample. Thus, one of the advantages of the invention over the state of the art results from the continuous measuring principle.

Moreover, with the knowledge of (the value of) the tack during the manufacturing process, it is possible to increase a controllability of the production process (e.g., by adjusting at least one processing parameter depending on the measured tack) and thereby the production process becomes more robust. Thereby, it is possible to avoid deposition defects at an early stage of the production process, which may reduce the scrap rate. In addition, the production process can be made more efficient since process parameters can be optimized by the exact determination of the tack. Thus, for example, a higher stacking speed can be achieved without the occurrence of defects.

In conclusion, the proposed measuring device reduces machine downtime, saves time for visual inspection, improves process stability, and reduces the risk of scrap and rework.

The following description of the measuring device describes the measuring device in its operating state.

The receiving unit may comprise an endless belt, optionally comprising metal, which is arranged and configured to continuously receive the partial section of the semi-finished fiber strip.

That is, the receiving unit may comprise an endless metal belt being in contact with the semi-finished fiber strip in the operating state of the measuring device, i.e., the semi-finished fiber strip may be adhered/attached to the endless metal belt in the operating state of the measuring device.

It is also possible to use other materials for the endless belt, like a synthetic material, e.g., including polyester, but metal is comparably stiff and has a low rolling resistance.

Therefore, metal, e.g., steel, copper and/or aluminum, is preferably used as source material for the endless belt. It is possible that the endless belt comprises a coating, e.g., a self-cleaning coating.

The compacting unit may be arranged and configured to press the received partial section of the semi-finished fiber strip onto the endless belt such that the received partial section of the semi-finished fiber strip is attached to the endless belt.

The peel-off unit may be arranged and configured to pull the partial section of the semi-finished fiber strip attached to the endless belt off the endless belt such that the carriage slides along the guide rail in the first direction.

The receiving unit may comprise a first drive unit configured to drive the endless belt such that the partial section of the semi-finished fiber strip attached to the endless belt is transported by the endless belt in a second direction from the compacting unit to the peel-off unit. Optionally, the first and second directions are perpendicular to each other.

The first drive unit may comprise at least two rollers being in contact with the endless belt for driving the endless belt.

The first drive unit may be configured to passively drive, i.e., guide, the tape through a measuring area and the tape may be pulled through the measuring area externally. The feed may be only affected by an external pulling force acting on the strip, which may be applied to the tape by a second drive unit described in detail below. Moreover, in an AFP system, the feed can be provided by the AFP system itself. Additionally or alternatively, the first drive unit may actively drive the tape through the measuring area and may therefore comprise a drive, such as a motor, e.g. a stepper motor.

The peel-off unit may comprise at least one roller being connected to at least one of the two rollers of the first drive unit such that the endless belt and the roller of the peel-off unit are driven with a substantially same rotational speed. For connecting the roller of the peel-off unit to the at least one of the two rollers of the first drive unit a gear transmission and/or a belt transmission may be provided. It is also possible to provide an additional drive/motor, as explained in detail below.

The compacting unit may be arranged and configured to press the received partial section of the semi-finished fiber strip onto the receiving unit by applying, onto the received partial section of the semi-finished fiber strip, a predefined compressive force acting in the first direction.

The peel-off unit may be arranged and configured to pull the partial section of the semi-finished fiber strip attached to the receiving unit off the receiving unit by applying, onto the partial section of the semi-finished fiber strip attached to the receiving unit, a tensile force acting in the first direction.

The compacting unit may comprise a roller and a pneumatic cylinder connected to the roller of the compacting unit for moving the roller of the compacting unit towards the receiving unit thereby pressing the received partial section of the semi-finished fiber strip via the roller of the compacting unit onto the receiving unit.

The peel-off unit may comprise a roller and a pneumatic cylinder connected to the roller of the peel-off unit for moving the roller of the peel-off unit towards the receiving unit.

The roller of the peel-off unit may be arranged and configured to guide the partial section of the semi-finished fiber strip attached to the receiving unit away from the receiving unit thereby pulling the partial section of the semi-finished fiber strip attached to the receiving unit off the receiving unit.

The pneumatic cylinder of the compacting unit may be configured to press the roller of the compacting unit with a predefined force onto the received partial section of the semi-finished fiber strip, wherein the predefined force is preferably between 5 N and 100 N, more preferably between 10 N to 90 N. The tape may have a width between 1/16 Inch and 1 Inch, e.g., 1/8 Inch, 1/4 Inch or 1/2 Inch.

That is, both, the roller of the compacting unit and the roller of the peel-off unit, may be mounted on movable bearings and may be controlled by pneumatic cylinders, respectively. This makes it possible to start and interrupt measurements in a pretended manner. The start-stop-control may be provided, additionally or alternatively, via a second drive unit. When the respective pneumatic cylinders are in an open/unloaded state, the rollers of the compacting unit and of the peel-off unit each may move away from the tape so that the tape passes through the measuring area without being compacted onto the substrate, i.e., the receiving unit. When the respective pneumatic cylinders are in a closed/loaded state, the rollers of the compacting unit and of the peel-off unit each may move towards the tape so that compacting occurs and a measurement of the tack is performed. In addition, an air pressure applied to the pneumatic cylinder associated with the roller of the compacting unit can be used to determine a compacting force. The compacting, i.e., compressive, force may be set to any value between 5 N and 100 N, preferably between 10 N and 90 N. The pneumatic cylinders may be supplied/loaded with compressed air via solenoid valves, respectively.

The measuring device may comprise a brake unit being arranged and configured to apply a predefined retention force onto the semi-finished fiber strip to be received by the receiving unit.

The measuring device may comprise a second drive unit being arranged and configured to apply a predefined tensile force onto the semi-finished fiber strip for controlling a feed rate of the semi-finished fiber strip.

That is, to ensure a stable measurement, the tape to be tested may be introduced into the measuring area with a defined retention force. This retention force may be applied with the aid of a hysteresis brake connected to a coil on which the raw material, i.e., the tape, is wound. The forward feed of the tape through the measuring area may be controlled by a stepper motor. This ensures a constant test speed that can be precisely specified.

In conclusion, a measuring device is provided that may use a measuring principle based on the fact that the material or tape to be tested continuously passes through a test or measuring area in which it is pressed firmly onto a substrate and then pulled off again. That is, the above-described carriage forms the measuring area of the device. The resulting peel-off or pull-off force determines the tack of the tested tape. First, the incoming tape is pressed onto a circulating metal, preferably steel, belt by a roller of the compacting unit with a defined force. The metal belt is actively or passively driven, e.g. by the movement of the tape through the measuring area, and moves through the measuring area, preferably at exactly the same speed as the tape. Thus, there is no shear stress between the tape and the substrate, i.e., here the metal belt. Afterwards, the tape to be measured is pulled off the metal belt at an angle of substantially 90° (respective to the surface/moving direction of the metal belt within the measurement area) via a roller of the peel-off unit. Depending on the respective tack, this results in a peeling force acting on the metal belt in the deflection/peeling direction. Via the three rollers by/on which the metal belt is guided, said force is transmitted to the slide/carriage which is mounted such that it can move in the deflection direction. The carriage finally transmits the force to a load cell which is connected to the ground, i.e., which has a fixed position.

According to a second aspect of the invention, a laying head is provided. The laying head is configured to deposit a semi-finished fiber strip comprising a thermoset matrix onto a substrate thereby manufacturing a predefined part additively. The laying head comprises the above-described measuring device.

The laying head may be configured to be used in an AFP process for additively manufacturing the predefined part.

The measuring device may be arranged and configured to determine an adhesive force of the semi-finished fiber strip to be deposited by the laying head, preferably continuously, online/in real time, i.e. during manufacturing of the predefined part.

The laying head may comprise a control unit being connected to the measuring device. The control unit may comprise at least one of a microcontroller, a processor and a storage/memory.

The measuring device may be configured to output a value relating to the measured adhesive force to the control unit. The control unit may be configured to receive the value from the measuring device and to control the manufacturing of the predefined part based on the received value.

The control unit may be configured to determine if the received value is within a predefined range and to stop the manufacturing of the predefined part if the value is not within the predefined range. Said predefined range may be provided by user input or may be stored as a look-up table or the like in a storage/memory comprised by the control unit.

Moreover, all or at least some components of the measuring device, e.g., the above-described stepper motor and/or the solenoid valves, may be controlled centrally via the control unit. In other words, the control unit may provide the possibility for a user to centrally define a sequence of a measurement.

The measuring device may be arranged inside the laying head. That is, the measuring device may have such outer dimensions that it is possible to accommodate, i.e., integrate, the measuring device into the laying head. In some cases the measuring device cannot be integrated into the laying head of an AFP machine due to geometrical restrictions. This is especially the case for smaller machines. Here the measuring device may be integrated into a creel, where bobbins containing the raw material are located. So, according to a third aspect of the invention, a creel is provided, which comprises the above-described measuring device. In some embodiments, the measuring device is arranged inside the creel. That is, the measuring device may have such outer dimensions that it is possible to accommodate, i.e., integrate, the measuring device into the creel.

In other words, as described above, the measuring device is capable of testing the tapes during the ongoing process of manufacturing, i.e., during laying the tape on a substrate, and determining its tack. For this purpose, the laying head may be extended by an inline testing unit, here the measuring device. In the measuring device the tape is pressed onto the substrate in a controlled manner, e.g., continuously, and then peeled off the substrate. The force required for the peeling process may be monitored by the control unit. If the peeling force exceeds or falls below a threshold value, appropriate corrective measures can be taken on the process parameters, preferably in real time.

That is, by integrating the measuring device into an AFP line, e.g., into the laying head or into the creel, it is possible to perform online monitoring of the processed tapes directly during deposition and to optimally adjust the line parameters to the current level of the raw material's tack. In this way, substantially error-free depositing can be ensured.

In some embodiments, the tape may be conveyed through the measuring area by the AFP system, which means that certain peripheral components, such as the stepper motor, i.e., the second drive unit, and/or the hysteresis brake, i.e., the brake unit, are not required. This leads to a further reduction of the size of the measuring device, which simplifies an integration into the AFP system.

Moreover, the above given description with respect to the measuring device applies mutatis mutandis to the laying head and to the creel and vice versa.

According to a fourth aspect of the invention, a method for determining an adhesive force of a semi-finished fiber strip comprising a thermoset matrix is provided, wherein the method comprises using the above-described measuring device for measuring the adhesive force of the semi-finished fiber strip.

More specifically, at the beginning of the method, the above-described pneumatic cylinders may be in an open/unloaded state, i.e., both the compacting unit and the peel-off unit may be moved away from the receiving unit, and the tape may pass through a measuring area defined by the carriage without being compacted, i.e., attached to the receiving unit. In this state, a basic force level may be measured.

Afterwards, the pneumatic cylinder of the compacting unit may be transferred into a closed/loaded state. That is, the compacting unit may be moved towards the receiving unit, whereby there is a first increase in the level of force, i.e., a first force level being larger than the basic force level may be measured at the force sensor. The tape is now compacted onto the substrate as it passes through the measuring area, i.e., the received partial section of the semi-finished fiber strip is attached to the receiving unit and is transported towards the peel-off unit by the receiving unit.

Before the compacted tape reaches the deflection roller, the deflection roller may be moved towards the receiving unit by transferring the pneumatic cylinder of the peel-off unit into a closed/loaded state. A time of closing the pneumatic cylinder of the peel-off unit may be set variably. The time at which the pneumatic cylinder of the peel-off unit is closed may be substantially a same time at which the pneumatic cylinder of the compacting unit is closed. After moving the deflection roller towards the receiving unit, substantially no force may be transmitted from the peel-off unit to the tape. A distance between the receiving unit and the peel-off unit may be set in a defined manner.

Then, the compacted tape may reach the deflection roller and may be peeled/pulled off the substrate, i.e., the peel-off unit may pull the partial section of the semi-finished fiber strip attached to the receiving unit off the receiving unit. Thus, there is a second increase in the level of force, i.e., a second force level being larger than the first force level may be measured at the force sensor.

In a following step, a difference between the first and the second force levels may be determined, e.g., by the above-described control unit, wherein the difference reflects/corresponds with the tack of the material, i.e., the adhesive force of the semi-finished fiber strip.

Moreover, the above given description with respect to the measuring device, the laying head and the creel applies mutatis mutandis to the method and vice versa.

In the following, a description of an embodiment of the present invention is given with respect to figures 1 to 3.
- Fig. 1: depicts schematically a laying head comprising a measuring device for determining an adhesive force of a semi-finished fiber strip.
- Fig. 2: depicts a flowchart of a method for determining the adhesive force of the semi-finished fiber strip using the measuring device of figure 1.
- Fig. 3: depicts a measurement curve of a tack measurement according to the method of figure 2.

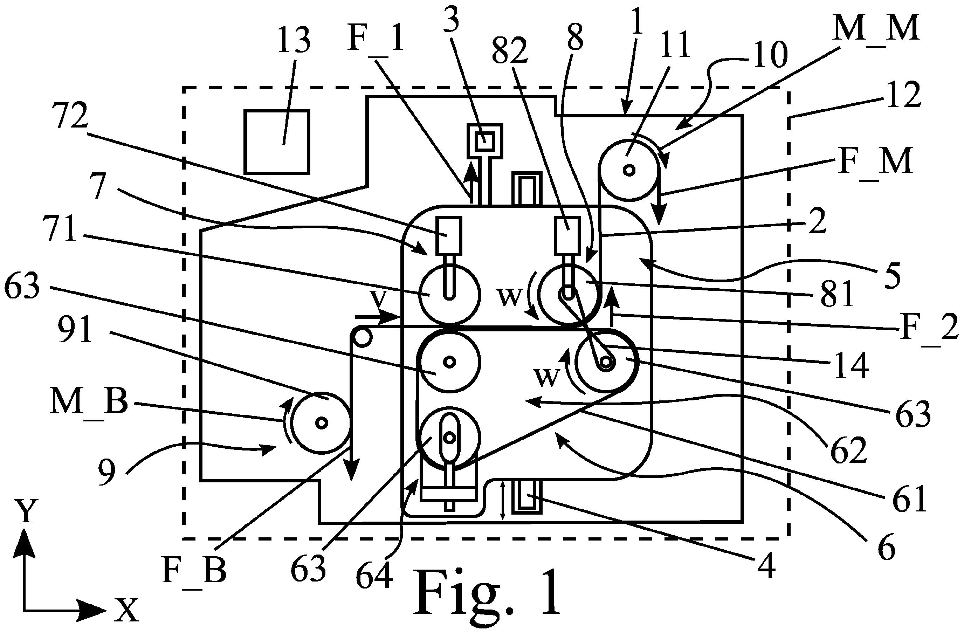

As can be gathered from figure 1, which is a side view of a laying head 12, the laying head 12 comprises a measuring device 1, which is arranged inside the laying head 12, and a control unit 13 being connected to the measuring device 1 and to the laying head 12.

The laying head 12 is configured to be used in an Automated Fiber Placement (AFP) process. The AFP process is a fully automated manufacturing process for composite parts. Robot-guided, fiber-reinforced plastic tapes, here a semi-finished fiber strip 2 comprising a thermoset matrix, are placed along a predefined path on a three-dimensional mold surface using pressure and temperature.

Thus, the laying head 12 is configured to deposit the semi-finished fiber strip 2 comprising the thermoset matrix onto a (not shown) substrate, e.g., a mold, thereby manufacturing a predefined part additively.

The main influencing parameters in the AFP process are a pressure force, a laydown speed of the semi-finished fiber strip 2 and a process temperature. The deposition carried out by the laying head 12 is controlled by the control unit 13, wherein the control unit 13 is configured to monitor these parameters and to control the manufacturing of the predefined part based on the monitored parameters.

Additionally, before the semi-finished fiber strip 2 is deposited by the laying head 12 onto the substrate, the semi-finished fiber strip 2 is guided through the measuring device 1.

The measuring device 1 is arranged and configured to determine an adhesive force of the semi-finished fiber strip 2 continuously during manufacturing of the predefined part, i.e., the measuring device is arranged and configured to determine a tack of the semi-finished fiber strip 2 online at a run time of the laying head 12.

The measuring device 1 is configured to output a value relating to the measured adhesive force, optionally the determined adhesive force itself, to the control unit 13.

The stickiness of the tapes, i.e., the tack, which mainly depends on the process temperature, strongly influences the laydown behavior of the semi-finished fiber strip 2.

Therefore, the control unit 13 is configured to receive the value from the measuring device 1 and to control the manufacturing of the predefined part based on the received value.

More specifically, the control unit 13 is configured to determine if the received value is within a predefined range and to stop the manufacturing of the predefined part if the value is not within the predefined range.

Thus, with the above-described laying head 12, it is not only possible to monitor the process parameters, like the process temperature, but also the material properties of the used prepreg tapes 2, thereby increasing process stability and quality of the manufactured parts.

This is possible since the measuring device 1 is arranged and configured to measure the tack online. Therefore, the measuring device 1 will be explained in detail below.

The measuring device 1 comprises a force sensor 3, a guide rail 4, a carriage 5, a brake unit 9 and a second drive unit 10.

The brake unit 9 is arranged at an input side of the measuring device 1 and the second drive unit 10 is arranged at an output side of the measuring device 1.

The second drive unit 10 comprises a stepper motor (not shown) and a roller 11 being connected to the stepper motor. The roller 11 is in contact with the semi-finished fiber strip 2, i.e., a partial section of the semi-finished fiber strip 2 is in effective connection to the roller 11 of the second drive unit 10 in the operating state of the measuring device 1. The stepper motor drives the roller 11 of the second drive unit 10 such that the roller 11 of the second drive unit 10 rotates around an axle via which it is connected to the underground, i.e., which is fixed. The second drive unit 10 is arranged and configured to apply a predefined tensile force F_M resulting from a torque M_M onto the semi-finished fiber strip 2 for controlling a feed rate of the semi-finished fiber strip 2. In other words, the semi-finished fiber strip 2 is pulled through the measuring device 1 with a predetermined speed v by rotating the roller 11 with a predetermined rotational speed, wherein the stepper motor determines the rotational speed and wherein a speed of the stepper motor is controlled by the control unit 13. Thus, it is possible to control the feed rate via the control unit 13.

The brake unit 9 comprises a friction brake and/or a hysteresis brake (not shown), e.g., a controllable hysteresis brake, and a roller 91 being connected to the brake. The friction brake and the hysteresis brake are just an example for a brake to be used in or as the brake unit 9, wherein the invention is not limited thereto. Also other bakes may be used, i.e., brakes providing a constant break moment. To ensure that no measurement errors are caused by the brake unit 9, an additional monitoring of a tension of the semi-finished fiber strip 2 is also conceivable. The roller 91 is in contact with the semi-finished fiber strip 2, i.e., a partial section of the semi-finished fiber strip 2 is in effective connection to the roller 91 of the brake unit 9 in the operating state of the measuring device 1. The brake applies a predefined breaking force onto the roller 91 of the brake unit 9 such that the roller 91 of the brake unit 9 rotates around an axle via which it is connected to the underground, i.e., which is fixed, with a predefined rotational speed. The brake unit 9 is arranged and configured to apply via its roller 91 a predefined retention force F_B resulting from a torque M_B onto the semi-finished fiber strip 2 to be received by the receiving unit 6. The strength of the breaking force of the brake is controlled by the control unit 13. Thus, it is possible to control the retention force F_B via the control unit 13.

The carriage 5 forming a measuring area of the measuring device 1 is mounted on the guide rail 4 such that it is slidable along the guide rail 4 in a first direction Y (see double arrow in figure 1).

In the first direction Y a distance between the brake unit 9 and the force sensor 3 is larger than a distance between the second drive unit 10 and the force sensor 3. The semi-finished fiber strip 2 is guided from the input side of the measuring device 1 via the brake unit 9, the carriage 5 and the second drive unit 10 to the output side of the measuring device 1 in an S-form, as can be gathered from figure 1. The input side of the measuring device 1 is connected to a spindle (not shown) comprising the semi-finished fiber strip 2 and the output side of the measuring device 1 is connected to an output (not shown) of the laying head 12 via which the semi-finished fiber strip 2 is deposited onto the substrate.

The carriage 5 comprises a receiving unit 6, a compacting unit 7 and a peel-off unit 8.

The receiving unit 6 is arranged and configured to continuously receive a partial section of the semi-finished fiber strip 2.

The compacting unit 7 is arranged and configured to press the received partial section of the semi-finished fiber strip 2 onto the receiving unit 6 such that the received partial section of the semi-finished fiber strip 2 is attached to the receiving unit 6.

The peel-off unit 8 is arranged and configured to pull the partial section of the semi-finished fiber strip 2 attached to the receiving unit 6 off the receiving unit 6 such that the carriage 5 slides along the guide rail 4 in the first direction.

More specifically, the receiving unit 6 comprises an endless belt 61 made of metal, which is arranged and configured to continuously receive the partial section of the semi-finished fiber strip 2, and a first drive unit 62 configured to drive the endless belt 61. The first drive unit 62 comprises three rollers 63 being in contact with the endless belt 61, i.e., the endless belt 61 is wound around the three rollers 63. By rotating at least one of the rollers 63 around its respective axle, which is connected to the carriage 5, the endless belt 61 is driven. Here, the endless belt 61 is driven such that it rotates around the three rollers 63 in a clockwise direction.

As can be gathered from figure 1, the receiving unit 6 may comprise a belt tensioner 64, e.g., connected to one of the rollers 63 of the receiving unit 6, for tensioning the endless belt 61 thereby eliminating failures due to a change in a length of the endless belt 61 during use of the measuring device 1.

The compacting unit 7 is arranged and configured to press the received partial section of the semi-finished fiber strip 2 onto the endless belt 61 by applying, onto the received partial section of the semi-finished fiber strip 2, a predefined compressive force acting opposite to the first direction Y. Here, the compacting unit 7 comprises a roller 71 and a pneumatic cylinder 72 connected to the roller 71 of the compacting unit 7 for moving the roller 71 of the compacting unit 7 towards the endless belt 61 thereby pressing the received partial section of the semi-finished fiber strip 2 via the roller 71 of the compacting unit 7 onto the endless belt 61. Thus, the received partial section of the semi-finished fiber strip 2 is attached to, i.e., compacted on, the endless belt 61. The compacting force applied onto the semi-finished fiber strip 2 and defined by a position of the pneumatic cylinder 72 and the roller 71, may be controlled by the control unit 13 which may be configured to control at least one solenoid valve (not shown) connected to the pneumatic cylinder 72 of the compacting unit 7. That is, the pneumatic cylinder 72 of the compacting unit 7 is configured to press the roller 71 of the compacting unit 7 with a predefined force onto the received partial section of the semi-finished fiber strip 2.

Since the endless belt 61 is driven such that it rotates around the three rollers 63 in the clockwise direction, as described above, the partial section of the semi-finished fiber strip 2 attached to the endless belt 61 is transported in a second direction X from the compacting unit 7 towards the peel-off unit 8. Here, the second direction X is perpendicular to the first direction Y, i.e., to a direction of movement of the carriage 5 along the guide rail 4, such that the above-described S-form of the semi-finished fiber strip 2 results.

The peel-off unit 8 is arranged and configured to pull the partial section of the semi-finished fiber strip 2 attached to the endless belt 61 off the endless belt 61 by applying, onto the partial section of the semi-finished fiber strip 2 attached to the receiving unit 6, a tensile force F_2 acting in the first direction Y. Therefore, the peel-off unit 8 comprises a roller 81. The roller 81 of the peel-off unit 8 is arranged to guide the partial section of the semi-finished fiber strip 2 attached to the receiving unit 6 away from the receiving unit 6 towards the second drive unit 10 thereby pulling the partial section of the semi-finished fiber strip 2 attached to the endless belt 61 off the endless belt 61. Thus, the carriage 5 slides along the guide rail 4 in the first direction Y towards the force sensor 3.

The roller 81 is also connected to one of the three rollers 63 of the first drive unit 62 via a belt 14 (here the belt has a form like a lying eight) such that the endless belt 61 and the roller 81 of the peel-off unit 8 are driven with a substantially same rotational speed w. Additionally or alternatively to the belt 14, a gear transmission (not shown) may be provided. Both rollers 63, 81 have a same diameter and since they are driven with the same rotational speed w, an outer surface of the roller 81 being in contact with the semi-finished fiber strip 2 attached to the endless belt 61 has the same speed v as the semi-finished fiber strip 2 attached to the endless belt 61. In conclusion, a shear stress between the endless belt 61 and the semi-finished fiber strip 2 as well as between the roller 81 of the peel-off unit 8 and the semi-finished fiber strip 2 can be avoided.

The peel-off unit 8 comprises a pneumatic cylinder 82 connected to the roller 81 of the peel-off unit 8 for moving the roller 8 of the peel-off unit 81 towards the endless belt 61. Additionally or alternatively to the pneumatic cylinder 82, a hydraulic cylinder, an electromagnetic linear drive, a spring, an electric actuator, and/or a motor driven linear drive may be provided. The position of the pneumatic cylinder 82 and the roller 81 may be controlled by the control unit 13 which may be configured to control at least one valve, e.g., a solenoid valve (not shown), connected to the pneumatic cylinder 82 of the peel-off unit 8. In contrary to the compacting unit 7, the peel-off unit 8 is in contact with the semi-finished fiber strip 2 but does substantially not apply a compressive force onto the semi-finished fiber strip 2 during the measurement of the adhesive force.

Because of the movement of the carriage 5 along the guide rail 4 towards the force sensor 3, a force F_1 is applied onto the force sensor 3. The force F_1 applied onto the force sensor 3 is substantially a sum of the tensile force F_2 and the retention force F_B and is substantially the same as tensile force F_M, acting opposite to the first direction Y. Thus, the force sensor 3 is arranged and configured to measure the force F_1 applied onto the force sensor 3 by the carriage 5 sliding along the guide rail 4 towards the force sensor 3 for determining the adhesive force.

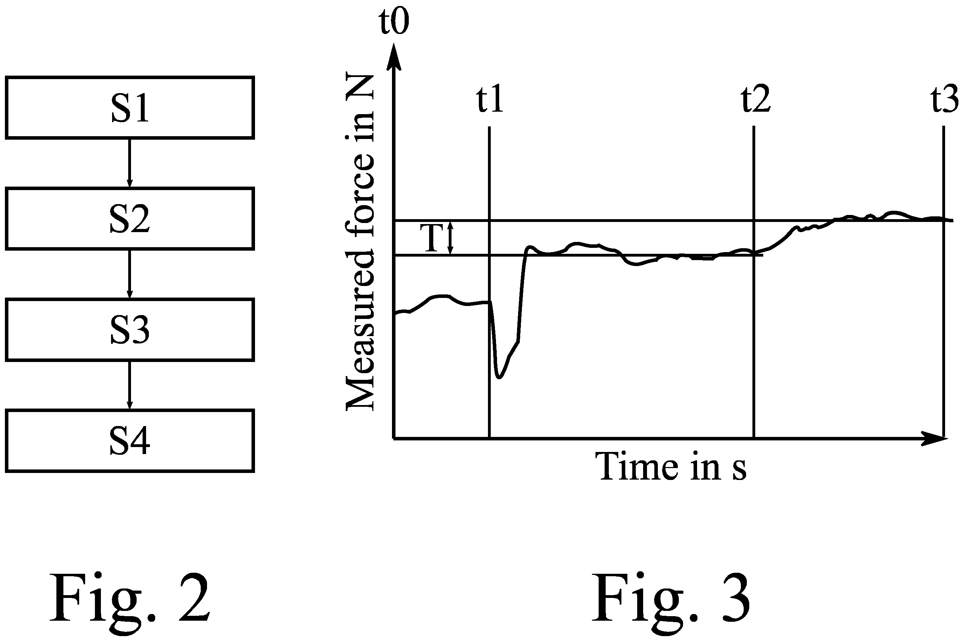

In the following, a method for determining the adhesive force of a semi-finished fiber strip 2 comprising a thermoset matrix using the measuring device 1 will be described with respect to figures 2 and 3.

As can be gathered from figure 2, showing schematically a flow chart of the method, the method comprises substantially four steps S1 - S4.

In figure 3 the measurement curve of a tack measurement is shown, wherein the vertical axis depicts the force F_1 measured by the force sensor 3 in N and the horizontal axis depicts a time in s, i.e., figure 3 depicts a force-over-time measurement curve.

More specifically, in an optional first step S1 of the method the compacting unit 7 and the peel-off unit 8 may be moved away from or may be already placed away from the receiving unit 6. The semi-finished fiber strip 2 may pass between the compacting unit 7 and the receiving unit 6 as well as between the peel-off unit 8 and the receiving unit 6 without being pressed/compacted onto the receiving unit 6 and without being peeled off the receiving unit 6, respectively. The semi-finished fiber strip 2 may be in contact with the rollers 71, 81 such that the rollers 71, 81 are driven by the semi-finished fiber strip 2 moving though the measuring area. Thereby the endless belt 61 may be driven. In this state of the measuring device 1, which may also be called initial state (between t0 and t1 in figure 3), a reference measurement may take place. The force F_1 measured by the force sensor 3 is at a basic force level and may be called reference force. The force sensor 3 outputs the basic force level to the control unit 13. In the initial state the measuring device 1 may be calibrated. Thereby possible errors and/or failures may be detected in an early stage of the method.

In a second step S2 of the method, the compacting unit 7 is arranged such that it presses the received partial section of the semi-finished fiber strip 2 onto the receiving unit 6 such that the received partial section of the semi-finished fiber strip 2 is attached to the receiving unit 6. Also, the peel-off unit 8 is arranged such that it may pull the partial section of the semi-finished fiber strip 2 attached to the receiving unit 6 off the receiving unit 6. This state of the measuring device may be called measuring or operating state and is shown in figure 1.

More specifically, in the second step S2 of the method the controller 13 controls the solenoid valves connected to the pneumatic cylinders 72, 82 of the compacting unit 7 and the peel-off unit 8, respectively, such that the two pneumatic cylinders 72, 82 move the rollers 71, 81 towards the endless belt 61, respectively, at time t1. Due to the inertia of the rollers 71, 81, there is a jolt that passes through the measuring device 1 resulting in a drop in the measured force F_1. Only when this is over the increase in force becomes visible at time t2. The roller 71 of the compacting unit 7 is placed such that it is in contact with the semi-finished fiber strip 2 and applies a predefined compressive force onto the semi-finished fiber strip 2. The roller 81 of the peel-off unit 8 is placed such that it is in contact with the semi-finished fiber strip 2 but does substantially not apply a compressive force onto the semi-finished fiber strip 2. This results in an increase in the force F_1 measured by the force sensor 3, as can be gathered from figure 3 at time t2. The force sensor 3 outputs the force level measured at time t2 to the control unit 13.

The semi-finished fiber strip 2 is now attached to the endless belt 61 and is transported to the roller 81 of the peel-off unit 8.

In a third step S3 of the method, the semi-finished fiber strip 2 attached to the endless belt 61 reaches the roller 81 of the peel-off unit 8 and is pulled off the endless belt 61 by the peel-off unit 8. This results in a further increase in the force F_1 measured by the force sensor 3, as can be gathered from figure 3 at time t3. The force sensor 3 outputs the force level measured at time t3 to the control unit 13.

In a fourth step S4 of the method, the control unit determines the tack T of the semi-finished fiber strip 2 by computing a difference between the force level measured at time t3 and the force level measured at time t2. Additionally, it is possible that the control unit 13 takes into account the reference force at time t1 measured in step S1 for computing the tack T.

During manufacturing of the predefined part with the laying head 12 comprising the measuring device 1 and the control unit 13, the third and the fourth step S3, S4 may be repeated continuously. That is, the tack T may be computed continuously by continuously building a difference between a force F_1 actually measured at the force sensor 3 and the force measured at time t2. Thus, it is possible to continuously compute the tack T of the prepreg tape 2 online.

### Reference signs list

- 1: measuring device
- 2: semi-finished fiber strip
- 3: force sensor
- 4: guide rail
- 5: carriage
- 6: receiving unit
- 61: endless belt
- 62: first drive unit
- 63: roller
- 64: belt tensioner
- 7: compacting unit
- 71: roller
- 72: pneumatic cylinder
- 8: peel-off unit
- 81: roller
- 82: pneumatic cylinder
- 9: brake unit
- 91: roller
- 10: second drive unit
- 11: roller
- 12: laying head
- 13: control unit
- 14: belt
- F_1: force measured by force sensor
- F_2: tensile force
- F_B: retention force
- F_M: tensile force
- M_B: braking torque
- M_M: motor torque
- S1-S4: method steps
- T: tack
- t1, t2, t3: point in time
- v: speed of endless belt and semi-finished fiber strip
- w: rotational speed
- X: second direction
- Y: first direction

## Claims

1. A measuring device (1) for determining an adhesive force of a semi-finished fiber strip (2) comprising a thermoset matrix, wherein the measuring device (1) comprises:
- a force sensor (3), a guide rail (4), and a carriage (5),
- wherein the carriage (5) is mounted on the guide rail (4) such that it is moveable along the guide rail (4) in a first direction (Y), and comprises:
- a receiving unit (6) which is arranged and configured to continuously receive a partial section of the semi-finished fiber strip (2),
- a compacting unit (7) which is arranged and configured to press the received partial section of the semi-finished fiber strip (2) onto the receiving unit (6) such that the received partial section of the semi-finished fiber strip (2) is attached to the receiving unit (6), and
- a peel-off unit (8) arranged and configured to pull the partial section of the semi-finished fiber strip (2) attached to the receiving unit (6) off the receiving unit (6) such that the carriage (5) slides along the guide rail (4) in the first direction (Y), and
- wherein the force sensor (3) is arranged and configured to measure a force (F_1) applied onto the force sensor (3) by the carriage (5) moving along the guide rail (4) in the first direction (Y) for determining the adhesive force.

2. The measuring device (1) according to claim 1, wherein:
- the receiving unit (6) comprises an endless belt (61), optionally comprising metal, which is arranged and configured to continuously receive the partial section of the semi-finished fiber strip (2),
- the compacting unit (7) is arranged and configured to press the received partial section of the semi-finished fiber strip (2) onto the endless belt (61) such that the received partial section of the semi-finished fiber strip (2) is attached to the endless belt (61), and
- the peel-off unit (8) is arranged and configured to pull the partial section of the semi-finished fiber strip (2) attached to the endless belt (61) off the endless belt (61) such that the carriage (5) slides along the guide rail (4) in the first direction (Y).

3. The measuring device (1) according to claim 2, wherein:
- the receiving unit (6) comprises a first drive unit (62) configured to drive the endless belt (61) such that the partial section of the semi-finished fiber strip (2) attached to the endless belt (61) is transported by the endless belt (61) in a second direction (X) from the compacting unit (7) towards the peel-off unit (8), and
- wherein, optionally, the first and second directions (Y, X) are perpendicular to each other.

4. The measuring device (1) according to claim 3, wherein:
- the first drive unit (62) comprises at least two rollers (63) being in contact with the endless belt (61) for driving the endless belt (61), and
- the peel-off unit (8) comprises at least one roller (81) being connected to at least one of the two rollers (63) of the first drive unit (62) such that the endless belt (61) and the roller (81) of the peel-off unit (8) are driven with a substantially same rotational speed (w).

5. The measuring device (1) according to any one of claims 1 to 4, wherein:
- the compacting unit (7) is arranged and configured to press the received partial section of the semi-finished fiber strip (2) onto the receiving unit (6) by applying, onto the received partial section of the semi-finished fiber strip (2), a predefined compressive force acting in the first direction (Y), and/or
- the peel-off unit (8) is arranged and configured to pull the partial section of the semi-finished fiber strip (2) attached to the receiving unit (6) off the receiving unit (6) by applying, onto the partial section of the semi-finished fiber strip (2) attached to the receiving unit (6), a tensile force (F_2) acting in the first direction (Y).

6. The measuring device (1) according to any one of claims 1 to 5, wherein:
- the compacting unit (7) comprises a roller (71) and a pneumatic cylinder (72) connected to the roller (71) of the compacting unit (7) for moving the roller (71) of the compacting unit (7) towards the receiving unit (6) thereby pressing the received partial section of the semi-finished fiber strip (2) via the roller (71) of the compacting unit (7) onto the receiving unit (6), and/or
- the peel-off unit (8) comprises a roller (81) and a pneumatic cylinder (82) connected to the roller (81) of the peel-off unit (8) for moving the roller (81) of the peel-off unit (8) towards the receiving unit (6), wherein the roller (81) of the peel-off unit (8) is preferably arranged and configured to guide the partial section of the semi-finished fiber strip (2) attached to the receiving unit (6) away from the receiving unit (6) thereby pulling the partial section of the semi-finished fiber strip (2) attached to the receiving unit (6) off the receiving unit (6).

7. The measuring device (1) according to claim 6, wherein the pneumatic cylinder (72) of the compacting unit (7) is configured to press the roller (71) of the compacting unit (7) with a predefined force onto the received partial section of the semi-finished fiber strip (2), wherein the predefined force is preferably between 5 N and 100 N, more preferably between 10 N to 90 N.

8. The measuring device (1) according to any one of claims 1 to 7, wherein the measuring device comprises a brake unit (9) being arranged and configured to apply a predefined retention force (F_B) onto the semi-finished fiber strip (2) to be received by the receiving unit (6).

9. The measuring device (1) according to any one of claims 1 to 8, wherein the measuring device (1) comprises a second drive unit (10) being arranged and configured to apply a predefined tensile force (F_M) onto the semi-finished fiber strip (2) for controlling a feed rate of the semi-finished fiber strip (2).

10. A laying head (12) configured to deposit a semi-finished fiber strip (2) comprising a thermoset matrix onto a substrate thereby manufacturing a predefined part additively, wherein the laying head (12) comprises the measuring device (1) according to any one of claims 1 to 9, wherein, preferably, the measuring device (1) is arranged inside the laying head (12).

11. The laying head (12) according to claim 10, wherein the measuring device (1) is arranged and configured to determine an adhesive force of the semi-finished fiber strip (2) to be deposited by the laying head (12), preferably continuously, online/in real time.

12. The laying head (12) according to claim 11, wherein:
- the laying head (12) comprises a control unit (13) being connected to the measuring device (1),
- the measuring device (1) is configured to output a value relating to the measured adhesive force to the control unit (13), and
- the control unit (13) is configured to receive the value from the measuring device (1) and to control the manufacturing of the predefined part based on the received value.

13. The laying head (12) according to claim 12, wherein the control unit (13) is configured to determine if the received value is within a predefined range and to stop the manufacturing of the predefined part if the value is not within the predefined range.

14. A creel comprising the measuring device (1) according to any one of claims 1 to 9, wherein, preferably, the measuring device (1) is arranged inside the creel.

15. Method for determining an adhesive force of a semi-finished fiber strip (2) comprising a thermoset matrix using a measuring device (1) according to any one of claims 1 to 9.
